# EUROPEAN PATENT SPECIFICATION

(11) **EP 4 167 377 B1**
(45) Date of publication and mention of the grant of the patent: **28.01.2026**
(21) Application number: 21833310.2
(22) Date of filing: 30.06.2021
(51) Int. Cl.: H01Q 5/385, H01Q 5/392, H01Q 1/24, H01Q 9/42

(54) **ANTENNA AND MOBILE TERMINAL**
ANTENNE UND MOBILES ENDGERÄT
ANTENNE ET TERMINAL MOBILE

(30) Priority: 30.06.2020 CN 202010615049
(43) Date of publication of application: 19.04.2023
(60) Divisional application: 25223570.0
(73) Proprietor: Huawei Technologies Co., Ltd., Longgang District, Shenzhen, Guangdong 518129 (CN)
(72) Inventor: XUE, Liang, Shenzhen, Guangdong 518129 (CN); WANG, Hanyang, Shenzhen, Guangdong 518129 (CN); SHI, Chuanbo, Shenzhen, Guangdong 518129 (CN); GONG, Yiwen, Shenzhen, Guangdong 518129 (CN); WANG, Jikang, Shenzhen, Guangdong 518129 (CN); ZHANG, Xiaowei, Shenzhen, Guangdong 518129 (CN); YU, Dong, Shenzhen, Guangdong 518129 (CN)
(74) Representative: Gill Jennings & Every LLP
(86) International application number: PCT/CN2021/103880
(87) International publication number: WO 2022/002172

(56) References cited:
- WO-A1-2012/147355
- WO-A1-2017/104950
- WO-A1-2019/129098
- CN-A- 105 870 593
- CN-A- 107 666 036
- CN-A- 108 713 277
- CN-A- 108 879 116
- CN-A- 109 950 701
- CN-A- 111 180 872
- US-A1- 2009 015 487
- US-A1- 2018 278 287
- US-A1- 2023 216 196

## Description

### TECHNICAL FIELD

This application relates to the field of communications technologies, and in particular, to an antenna and a mobile terminal.

### BACKGROUND

In mobile phone industry, a full-ceramic (or glass) appearance becomes a main direction of evolution of a mobile phone. This means that an originally-exposed metal frame (an antenna radiator) is inwardly retracted within a screen or battery cover. Decrease in clearance inside the mobile phone causes sharp deterioration in performance of an antenna. In the conventional technology, performance of an antenna is improved by adding a parasitic stub. However, in the conventional technology, the performance of the antenna is improved by using the parasitic stub to a limited extent. US 2009/015487 A1 discloses a multiband antenna. WO 2019/129098 A1 discloses a multifrequency antenna and a mobile terminal. CN 111 180 872 A discloses an antenna device and electronic equipment. WO 2012/147355 A1 discloses a portable radio having broadband antenna characteristics. US 2018/278287 A1 discloses an antenna unit designed to operate on multiple bands of frequencies.

### SUMMARY

This application provides an antenna and a mobile terminal, as defined in the appended claims, to improve antenna performance.

### BRIEF DESCRIPTION OF DRAWINGS

FIG. 1 is a schematic diagram of an application scenario of an antenna according to an embodiment of this application;
FIG. 2 to FIG. 4 are schematic illustrative diagrams of coupling between stubs of an antenna;
FIG. 5 is a schematic diagram of a structure of an antenna according to an embodiment of this application;
FIG. 6 is a schematic diagram of a structure of a specific antenna in the conventional technology;
FIG. 7 is a schematic diagram of a structure of another specific antenna in the conventional technology;
FIG. 8 is a schematic simulation diagram of three types of antennas;
FIG. 9a to FIG. 9f are schematic diagrams of currents of an antenna in different modes according to an embodiment of this application;
FIG. 10 is a schematic diagram of efficiency of three types of antennas;
FIG. 11 is a schematic diagram of a structure of another antenna according to an embodiment of this application;
FIG. 12a to FIG. 12f are schematic simulation diagrams of currents of an antenna according to an embodiment of this application;
FIG. 13 is a schematic diagram of a structure of another antenna according to an embodiment of this application;
FIG. 14a to FIG. 14c are schematic simulation diagrams of currents of an antenna according to an embodiment of this application;
FIG. 15 is a schematic diagram of a structure of another antenna according to an embodiment of this application;
FIG. 16a to FIG. 16c are schematic diagrams of currents of an antenna according to an embodiment of this application;
FIG. 17 is a schematic diagram of a structure of another antenna according to an embodiment of this application;
FIG. 18a to FIG. 18c are schematic diagrams of currents of an antenna according to an embodiment of this application;
FIG. 19 is a schematic diagram of a structure of another antenna according to an embodiment of this application; and
FIG. 20 is a schematic diagram of a structure of another antenna according to an embodiment of this application.

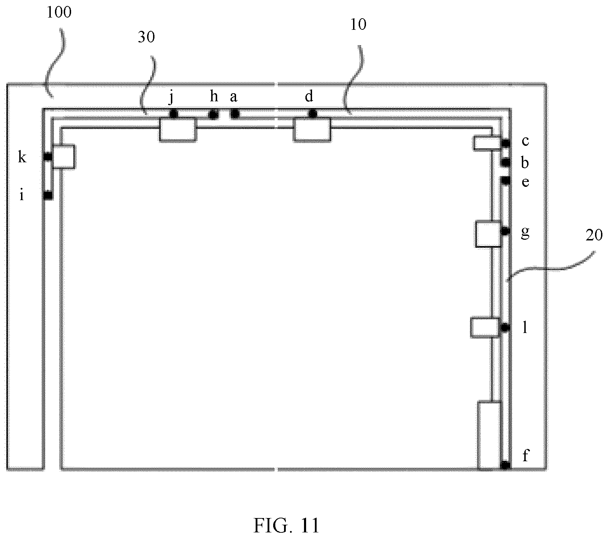

Only diagrams of FIGs. 11 - 14 explicitly disclose an antenna with a main stub, two parasitic stubs and five ground points as defined by the claims. Nevertheless, the remaining diagrams are useful for the understanding of the present invention in particular for the understanding of the coupling between the main and parasitic stubs and the different modes excited on the main and parasitic stubs.

### DESCRIPTION OF EMBODIMENTS

The following further describes embodiments of this application in detail with reference to the accompanying drawings.

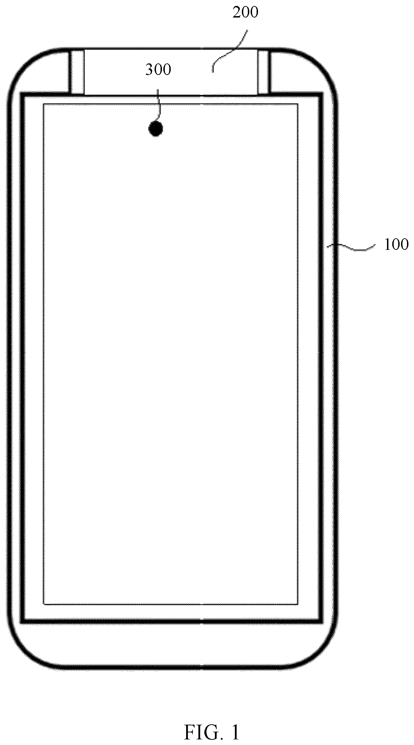

For ease of understanding an antenna provided in embodiments of this application, an application scenario of the antenna is first described. The antenna provided in embodiments of this application may be applied to a mobile terminal, including but not limited to common portable communication devices such as a mobile phone, a tablet computer, and an intelligent wearable device (for example, a band or an electronic watch). For example, FIG. 1 shows a structure in which an antenna is applied to a mobile phone. The mobile phone includes a housing 100 and a mainboard 300 disposed in the housing 100, and further includes an antenna 200 disposed in the housing 100. The antenna 200 is electrically connected to the mainboard 300, and is fed through the mainboard 300. However, with thinning development of the mobile phone, clearance in the mobile phone becomes smaller, and correspondingly, performance of the antenna 200 is greatly affected. Therefore, embodiments of this application provide an antenna, to improve antenna performance. The following describes the antenna provided in embodiments of this application with reference to specific accompanying drawings and embodiments.

Several concepts of coupling according to this application are first described. Details are as follows.

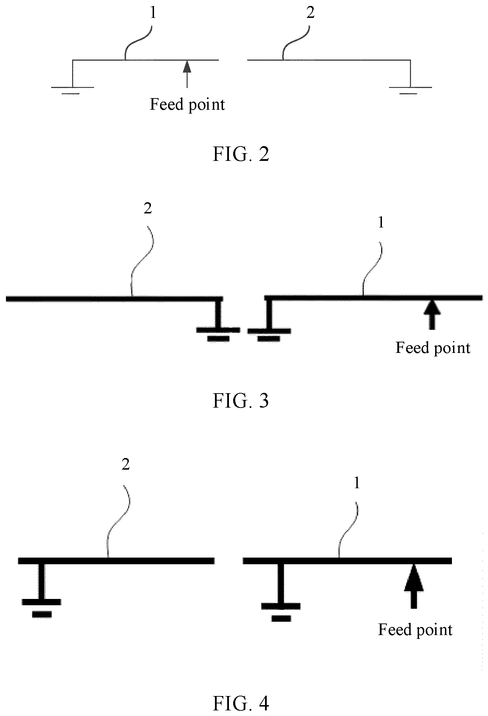

A main stub and a parasitic stub include ground-near ends and ground-distant ends. A ground point is disposed at the ground-near end, and the ground-distant end is far away from the ground point. The following types of coupling between the main stub and the parasitic stub are involved. In the antenna shown in FIG. 2, a ground-distant end of a main stub 1 is adjacent to and coupled to a ground-distant end of a parasitic stub 2, and the main stub 1 is coupled to the parasitic stub 2 by electric field coupling. In the antenna shown in FIG. 3, a ground-near end of the main stub 1 is adjacent to and coupled to a ground-near end of the parasitic stub 2 is adjacent and coupled, and the main stub 1 is coupled to the parasitic stub 2 by magnetic field coupling. In the antenna shown in FIG. 4, the ground-near end of the main stub 1 is adjacent to and coupled to the ground-distant end of the parasitic stub 2, and the main stub 1 is coupled to the parasitic stub 2 by electric field and magnetic field coupling. Alternatively, the ground-distant end of the main stub 1 is adjacent to and coupled to the ground-near end of the parasitic stub 2, and the main stub 1 is coupled to the parasitic stub 2 by electric field and magnetic field coupling.

For ease of description, in embodiments of this application, an end that is of a radiator and that is close to the ground point is referred to as a ground end, and an end that is of the radiator and that is away from the ground is referred to as a free end.

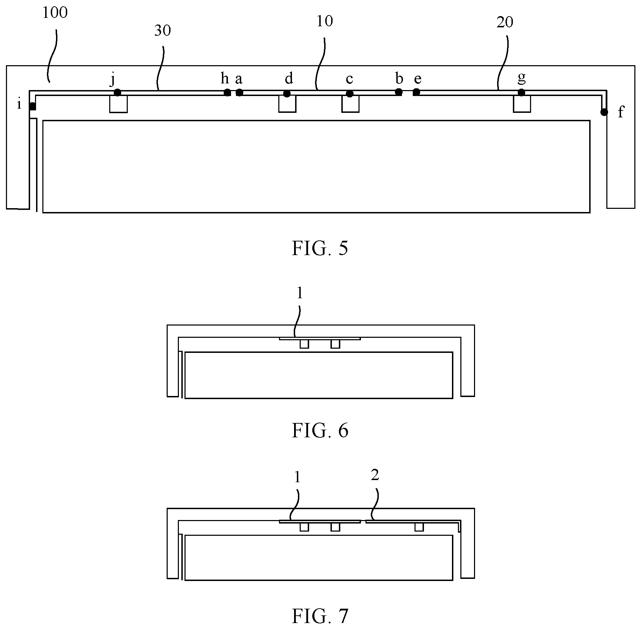

FIG. 5 is a schematic diagram of a structure of an antenna according to an embodiment of this application. The antenna includes a main stub 10, a first parasitic stub 20, and a second parasitic stub 30. The main stub 10 is configured as a main radiation structure of the antenna, and the first parasitic stub 20 and the second parasitic stub 30 are separately coupled to the main stub 10, to expand bandwidth of the antenna.

The main stub 10 may be of a long-strip-shaped metal structure. The main stub 10 may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, and the first ground point d is configured to connect to a ground cable. A length (a current path length) of the main stub 10 is not specifically limited in this application, and a specific length of the main stub 10 may be adjusted based on an operating frequency of the antenna.

The first parasitic stub 20 may be a parasitic stub configured to excite resonances in two different modes. As shown in FIG. 5, the first parasitic stub 20 may be of a long-strip-shaped structure. The first parasitic stub 20 may be a metal frame of the mobile terminal, may be structures such as an embedded metal layer, a laser forming structure, and a flexible circuit board that are in the housing 100 of the mobile terminal, or may be another metal structure in the housing 100. The first parasitic stub 20 has a third end e and a fourth end f. A second ground point g is disposed at a location that is of the first parasitic stub 20 and that is away from the third end e. There is a gap between the third end e of the first parasitic stub 20 and the second end b of the main stub 10. The first parasitic stub 20 is coupled to the main stub 10 via the gap between the second end b and the third end e. Because both the second end b and the third end e are free ends, the first parasitic stub 20 may be coupled to the main stub 10 by electric field coupling.

In an optional solution, an end that is of the first parasitic stub 20 and that is away from the main stub 10 has a bending structure, and the bending structure may be a bending structure formed along a shape in the housing 100 of the mobile phone. In allowed space in the housing 100 of the mobile phone, the first parasitic stub 20 may be bent along the space in the housing 100 of the mobile phone, to ensure a current path length of the first parasitic stub 20.

The second parasitic stub 30 may be a parasitic stub configured to excite resonances in two different modes. As shown in FIG. 5, the second parasitic stub 30 may be of a long-strip-shaped structure, and the second parasitic stub 30 has a fifth end h and a sixth end i. A third ground point j is disposed at a location that is of the second parasitic stub 30 and that is away from the fifth end h. There is a gap between the fifth end h of the second parasitic stub 30 and the first end a of the main stub 10. The second parasitic stub 30 is coupled to the main stub 10 via the gap between the first end a and the fifth end h. Because the fifth end h is a free end, and the first end a is a ground end, the second parasitic stub 30 may be coupled to the main stub 10 by electric field and magnetic field coupling.

In an optional solution, an end that is of the second parasitic stub 30 and that is away from the main stub 10 has a bending structure, and the bending structure may be a bending structure formed along a shape in the housing 100 of the mobile phone. In allowed space in the housing 100 of the mobile phone, the second parasitic stub 30 may be bent along the space in the housing 100 of the mobile phone, to ensure a current path length of the second parasitic stub 30.

In an optional solution, a tunable component or a fixed component may be connected between the second ground point g and the third ground point j. For example, the fixed component may be any one of a fixed resistor, a fixed capacitor, a fixed inductor component, a distributed inductor, a distributed capacitor, or a filter circuit, and the tunable component may be a switch or a variable capacitor. Any one of the foregoing components may be selectively connected to the second ground point g and the third ground point j, to adjust the current path lengths of the first parasitic stub 20 and the second parasitic stub 30. During specific connection, different components may be selected for connection in different connection manner: The second ground point g is connected to the fixed component, and the third ground point j is connected to the fixed component. Alternatively, the second ground point g is connected to the tunable component, and the third ground point j is connected to the tunable component. Alternatively, the second ground point g is connected to the fixed component,, and the third ground point j is connected to the tunable component. Alternatively, the second ground point g is connected to the tunable component, and the third ground point j is connected to the fixed component.

For ease of understanding a difference between an effect of the antenna provided in embodiments of this application and an effect of an antenna in the conventional technology, simulation is performed on the antenna in the conventional technology and the antenna provided in embodiments of this application. FIG. 6 shows a structure of a specific antenna in the conventional technology. The antenna shown in FIG. 6 includes only a main stub 1. For ease of description, the antenna shown in FIG. 6 is referred to as Case 1. The antenna shown in FIG. 7 includes a main stub 1 and a first parasitic stub 2, and the main stub 1 is coupled to the first parasitic stub 2 in an electric field coupling manner. For ease of description, the antenna shown in FIG. 7 is referred to as Case 2. The antenna shown in FIG. 5 in this application is referred to as Case 3.

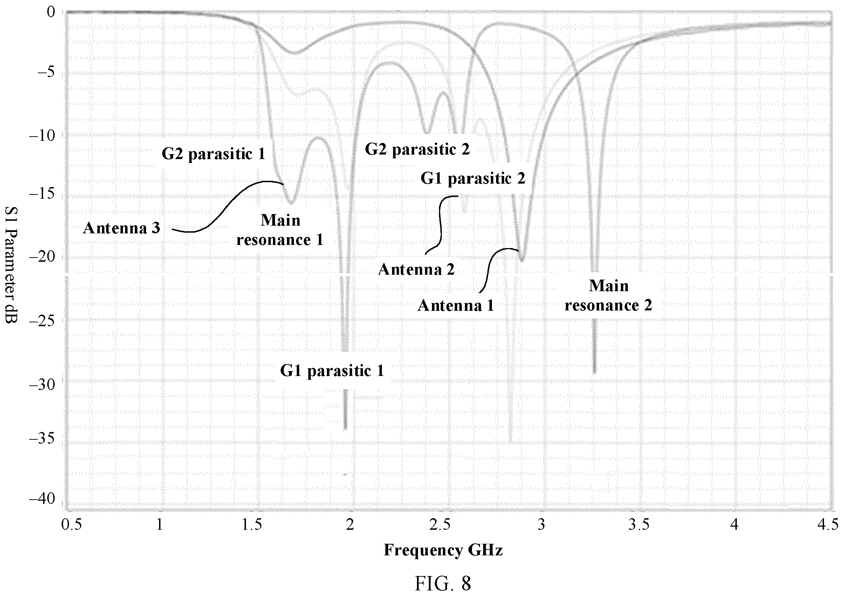

FIG. 8 shows a simulation diagram of three types of antennas. The main stub in Case 1 may be configured to excite two resonance modes. A first resonance is in a 1/4 mode of the main stub, and a second resonance is in a 1/2 mode of the main stub. Case 2 may be considered as adding the first parasitic stub in the upper right corner based on Case 1. When Case 2 operates, in addition to the 1/2 mode of the main stub and the 1/4 mode of the main stub, two new resonance modes are further excited by the first parasitic stub: a common mode and a differential mode of the first parasitic stub, which implements efficiency improvement and bandwidth expansion compared with Case 1. In addition to the main stub and the first parasitic stub, the antenna provided in this embodiment of this application may further include a second parasitic stub coupled to the main stub by electric field and magnetic field coupling. In this embodiment of this application, two resonance modes may be excited by the main stub, two resonance modes may be excited by the first parasitic stub, and two new resonance modes may be excited by the second parasitic stub: a common mode and a differential mode of the second parasitic stub. This can further improve main resonance efficiency and expand bandwidth, to implement full-band coverage of N3, N1, N41, and N77.

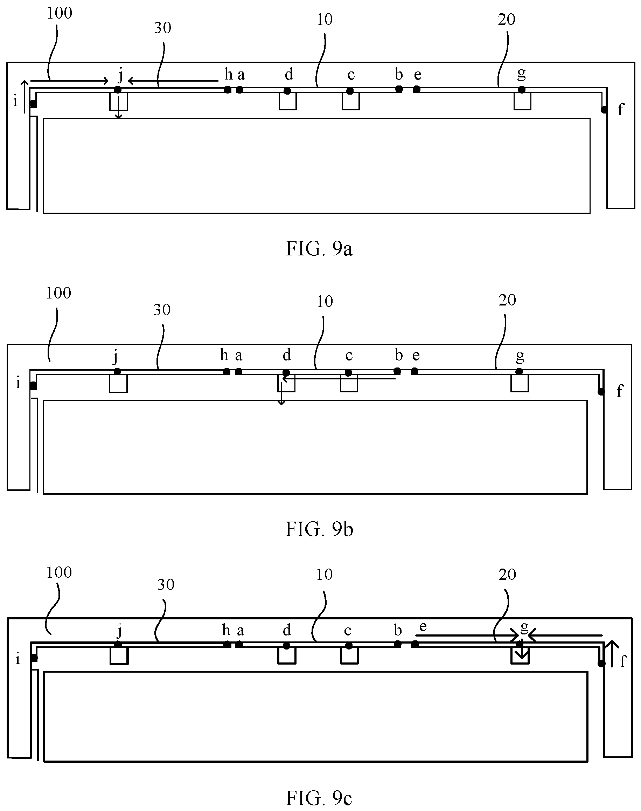

FIG. 9a to FIG. 9f are schematic diagrams of currents of an antenna in six modes according to an embodiment of this application.

First, refer to FIG. 9a. A current flows from the fifth end h and the sixth end i of the second parasitic stub 30 to the third ground point j. The current excites the common mode of the second parasitic stub 30. Refer to FIG. 8. A resonance in the common mode excited by the second parasitic stub 30 is at 1.6 GHz.

Refer to FIG. 9b. A current flows from the second end b of the main stub 10 to the first ground point d. The current excites the 1/4 mode of the main stub 10. Refer to FIG. 8. A resonance in the 1/4 mode excited by a circuit on the main stub 10 is at 1.7 GHz.

Refer to FIG. 9c. A current flows from the fourth end f of the first parasitic stub 20 to the second ground point g, and flows from the third end e to the second ground point g simultaneously. The current excites the common mode of the first parasitic stub 20. Refer to FIG. 8. A resonance in the common mode excited by the first parasitic stub 20 is at 1.95 GHz.

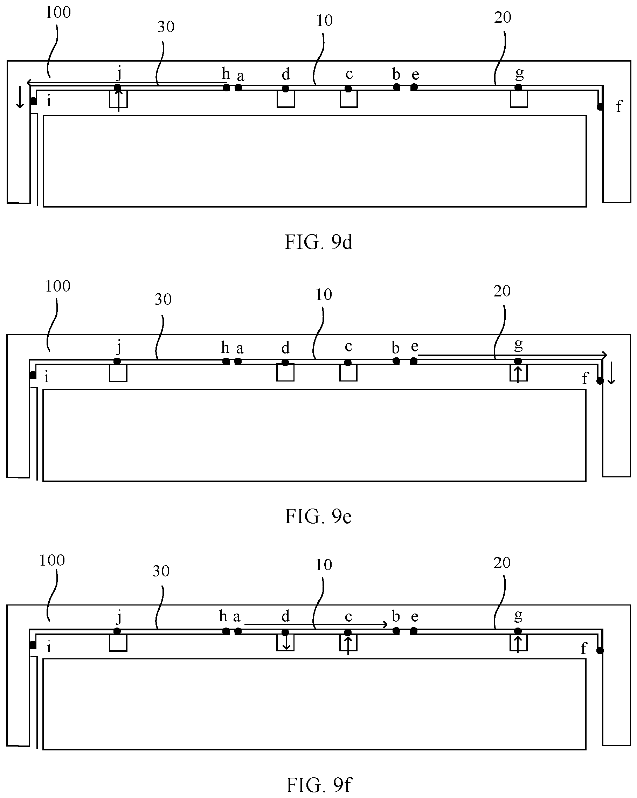

Refer to FIG. 9d. A current flows from the fifth end h of the second parasitic stub 30 to the sixth end i, and flows from the third ground point j to the sixth end i simultaneously. The current excites the differential mode of the second parasitic stub 30. Refer to FIG. 8. A resonance in the differential mode excited by the second parasitic stub 30 is at 2.35 GHz.

Refer to FIG. 9e. A current flows from the third end e of the first parasitic stub 20 to the fourth end f, and simultaneously, the current flows from the second ground point g to the fourth end f. The current excites the differential mode of the first parasitic stub 20. Refer to FIG. 8. A resonance in the differential mode excited by the first parasitic stub 20 is at 2.55 GHz.

Refer to FIG. 9f. A current flows from the first end a of the main stub 10 to the second end b and the first ground point d, and simultaneously, the current flows from the feed point c to the second end b. The current excites the 1/2 mode of the main stub 10. Refer to FIG. 8. A resonance in the 1/2 mode excited by the circuit on the main stub 10 is at 3.3 GHz.

Refer to FIG. 9a to FIG. 9e and FIG. 8. It can be learned that when the first parasitic stub 20 and the second parasitic stub 30 are used, the main stub 10 may be configured to excite two resonance modes. The first parasitic stub 20 is configured to excite two resonances, and a frequency of the resonance excited by the first parasitic stub 20 is greater than a frequency of the resonance excited by the main stub 10. The second parasitic stub 30 may be configured to excite two resonances, and a frequency of the resonance excited by the second parasitic stub 30 is less than a frequency of the resonance excited by the main stub 10. Two different resonances are excited by the first parasitic stub 20 and the second parasitic stub 30, to improve the antenna performance. This can further improve main resonance efficiency and expand bandwidth, to implement full-band coverage of N3, N1, N41, and N77.

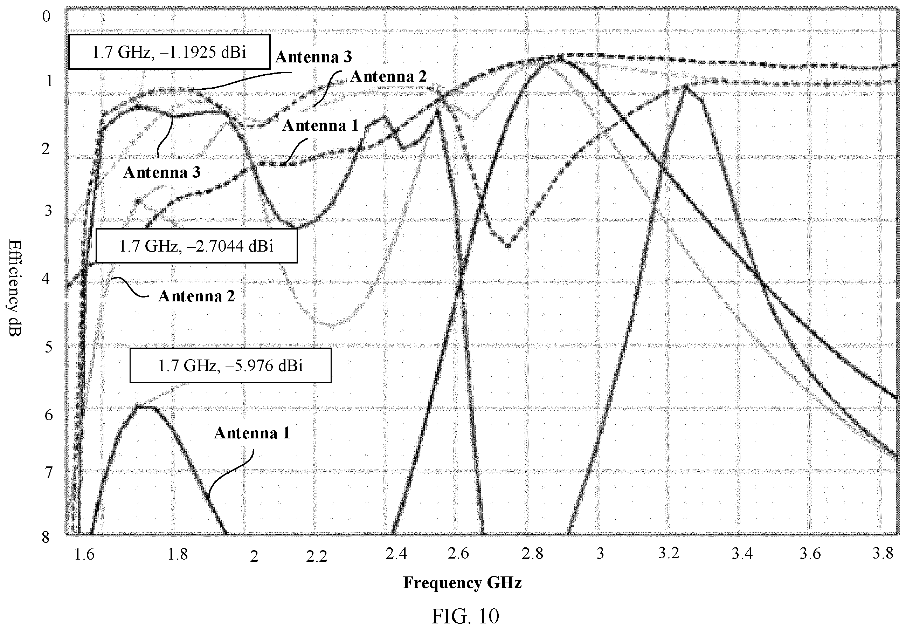

For ease of understanding effects of the antennas shown in FIG. 6 and FIG. 7 and the antenna in this application, simulation comparison is performed on the three antennas. A result is shown in FIG. 10. A solid line indicates system efficiency, and a dashed line indicates radiation efficiency. It can be learned from FIG. 10 that both system efficiency and radiation efficiency of Case 1 and Case 2 range from 1.5 GHz to 2.2 GHz, and are less than system efficiency and radiation efficiency of Case 3 provided in this embodiment of this application.

FIG. 11 is a schematic diagram of a structure of another antenna according to an embodiment of this application. The antenna includes a main stub 10, a first parasitic stub 20, and a second parasitic stub 30. The main stub 10 is configured as a main radiation structure of the antenna, and the first parasitic stub 20 and the second parasitic stub 30 are separately coupled to the main stub 10, to expand bandwidth of the antenna.

The main stub 10 may be of a long-strip-shaped metal structure. The main stub 10 may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, and the first ground point d is configured to connect to a ground cable. A length (a current path length) of the main stub 10 is not specifically limited in this application, and a specific length of the main stub 10 may be adjusted based on an operating frequency of the antenna.

In an optional solution, the main stub 10 has a length extending to an edge of the housing 100 of the mobile phone, and has a bending structure, to ensure a current path length of the main stub 10.

The first parasitic stub 20 is a parasitic stub configured to excite resonances in two different modes. As shown in FIG. 11, the first parasitic stub 20 may be a metal frame of the mobile terminal, may be structures such as an embedded metal layer, a laser forming structure, and a flexible circuit board that are in the housing 100 of the mobile terminal, or may be another metal structure in the housing 100. The first parasitic stub 20 may be of a long-strip-shaped structure, and the first parasitic stub 20 has a third end e and a fourth end f. The first parasitic stub 20 has two ground points: a second ground point g and a fifth ground point 1. The second ground point g is disposed at a location that is of the first parasitic stub 20 and that is away from the third end e, and the fifth ground point 1 is disposed on a side that is of the first parasitic stub 20 and that is close to the fourth end f. The second ground point g is a short-circuit point of the first parasitic stub 20 when the first parasitic stub 20 operates at a high frequency, and the fifth ground point 1 is a short-circuit point of the first parasitic stub 20 when the first parasitic stub 20 operates at a low frequency. There is a gap between the third end e of the first parasitic stub 20 and the second end b of the main stub 10. The first parasitic stub 20 is coupled to the main stub 10 bvia the gap between the second end b and the third end e. Because both the second end b and the third end e are free ends, the first parasitic stub 20 may be coupled to the main stub 10 by electric field coupling.

The second parasitic stub 30 is a parasitic stub configured to excite resonances in two different modes. As shown in FIG. 11, the second parasitic stub 30 may be a metal frame of the mobile terminal, may be structures such as an embedded metal layer, a laser forming structure, and a flexible circuit board that are in the housing 100 of the mobile terminal, or may be another metal structure in the housing 100. The second parasitic stub 30 may be of a long-strip-shaped structure, and the second parasitic stub 30 has a fifth end h and a sixth end i. The second parasitic stub 30 has two ground points: a third ground point j and a fourth ground point k. The third ground point j is disposed at a location that is of the second parasitic stub 30 and that is close to the fifth end h, and the fourth ground point k is disposed on a side that is of the second parasitic stub 30 and that is close to the sixth end i. The third ground point j is a short-circuit point of the second parasitic stub 30 when the second parasitic stub 30 operates at a high frequency, and the fourth ground point k is a short-circuit point of the second parasitic stub 30 when the second parasitic stub 30 operates at a low frequency. There is a gap between the fifth end h of the second parasitic stub 30 and the first end a of the main stub 10. The second parasitic stub 30 may be coupled to the main stub 10 via the gap between the first end a and the fifth end h. Because the fifth end h is a free end, and the first end a is a ground end, the second parasitic stub 30 may be coupled to the main stub 10 by electric field and magnetic field coupling.

In an optional solution, an end that is of the second parasitic stub 30 and that is away from the main stub 10 has a bending structure, and the bending structure is a bending structure formed along a shape in the housing 100 of the mobile phone. In allowed space in the housing 100 of the mobile phone, the second parasitic stub 30 may be bent along the space in the housing 100 of the mobile phone, to ensure a current path length of the second parasitic stub 30.

In an optional solution, a tunable component or a fixed component may be connected between the second ground point g, the third ground point j, the fifth ground point 1, and the fourth ground point k. For example, the fixed component may be any one of a fixed resistor, a fixed capacitor, a fixed inductor component, a distributed inductor, a distributed capacitor, or a filter circuit, and the tunable component may be a switch or a variable capacitor. Any one of the foregoing components may be selectively connected to the second ground point g, the third ground point j, the fifth ground point 1, and the fourth ground point k, to adjust the current path lengths of the first parasitic stub 20 and the second parasitic stub 30.

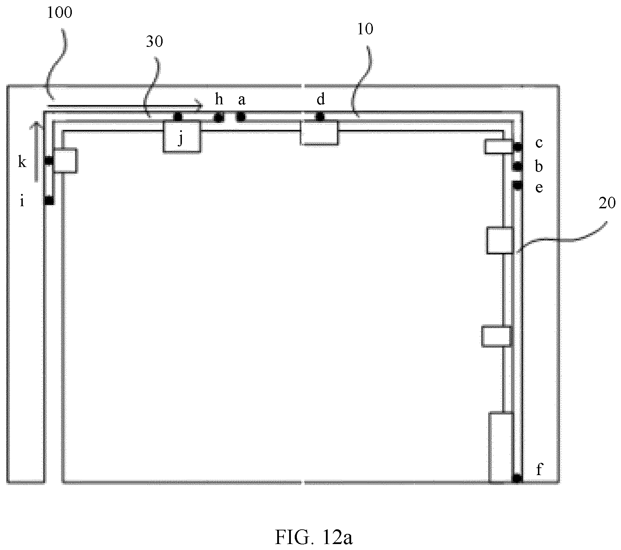

FIG. 12a to FIG. 12f are schematic simulation diagrams of currents of an antenna.

First, refer to FIG. 12a. A current flows from the sixth end i of the second parasitic stub 30 to the fifth end h. The current excites a 1/4 mode of the second parasitic stub 30. A resonance in the 1/4 mode excited by the second parasitic stub 30 is at 0.89 GHz.

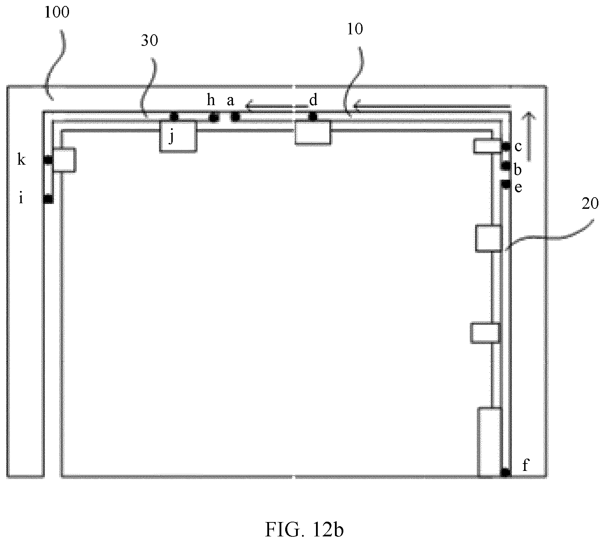

Refer to FIG. 12b. A current flows from the second end b of the main stub 10 to the first end a. The current excites a 1/4 mode of the main stub 10. A resonance in the 1/4 mode excited by the circuit on the main stub 10 is at 0.93 GHz.

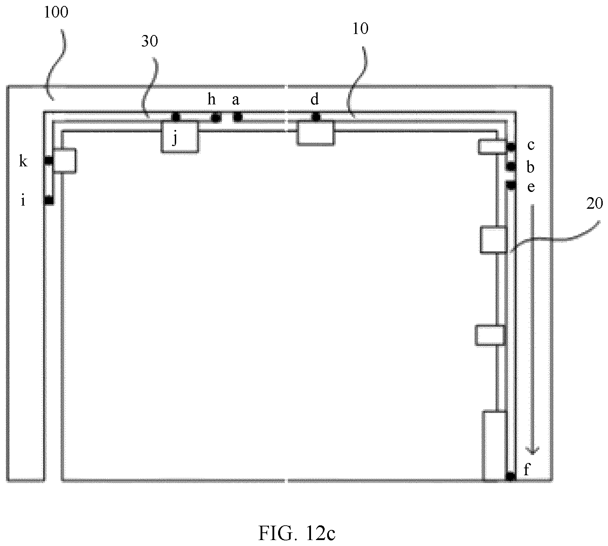

Refer to FIG. 12c. A current flows from the third end e of the first parasitic stub 20 to the fourth end f. The current excites a 1/4 mode of the first parasitic stub 20. A resonance in the 1/4 mode excited by the first parasitic stub 20 is at 1.01 GHz.

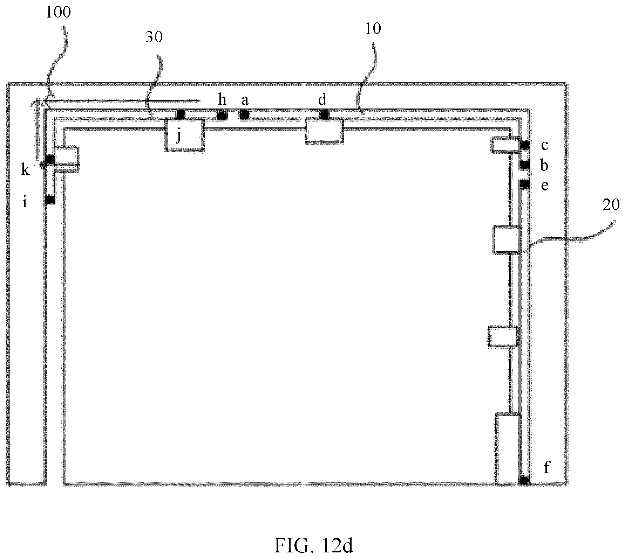

Refer to FIG. 12d. A current flows from the fourth ground point k of the second parasitic stub 30 to the fifth end h. The current excites a 3/4 mode of the second parasitic stub 30, and a resonance in the 3/4 mode excited by the second parasitic stub 30 is at 2.6 GHz.

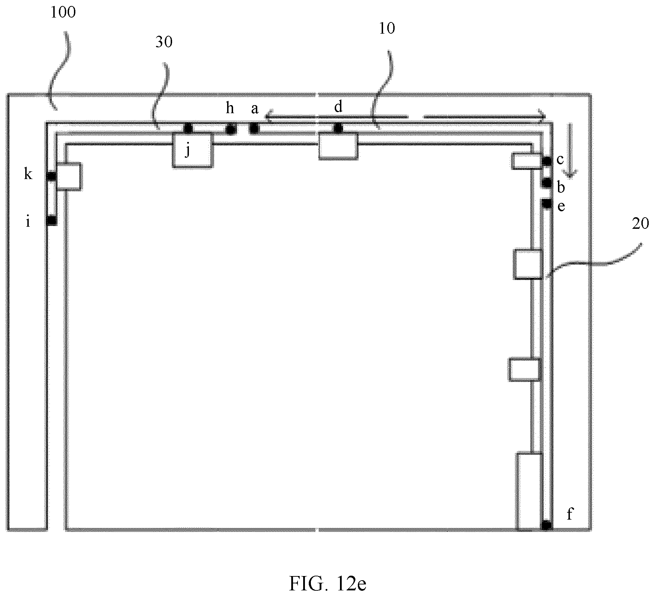

Refer to FIG. 12e. A current flows from the main stub 10 to the first end a and the second end b respectively. The current excites a 3/4 mode of the main stub 10, and a resonance in the 3/4 mode excited by the main stub 10 is at 2.7 GHz.

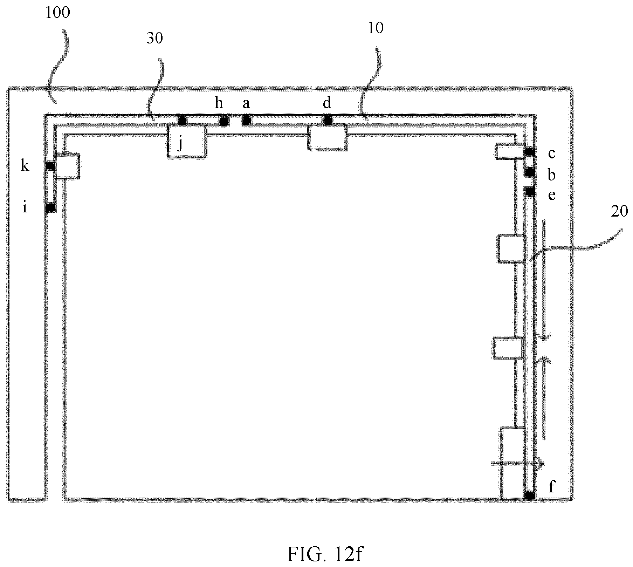

Refer to FIG. 12f. A current flows from the third end e of the first parasitic stub 20 to the middle, and flows from the fifth ground point 1 to the middle simultaneously. The current excites a 3/4 mode of the first parasitic stub 20, and a resonance in the 3/4 mode excited by the first parasitic stub 20 is at 2.75 GHz.

Refer to FIG. 12a to FIG. 12e. It can be learned that when the first parasitic stub 20 and the second parasitic stub 30 are used, the main stub 10 may be configured to excite two resonance modes. The first parasitic stub 20 is configured to excite two resonances, and a frequency of the resonance excited by the first parasitic stub 20 is greater than a frequency of the resonance excited by the main stub 10. The second parasitic stub 30 may be configured to excite two resonances, and a frequency of the resonance excited by the second parasitic stub 30 is less than a frequency of the resonance excited by the main stub 10.

It can be learned from the foregoing that when the first parasitic stub 20 and the second parasitic stub 30 provided in this embodiment of this application operate. the resonances in the two different modes may include any two of a resonance in a 1/4λ mode, a resonance in a 1/2λ mode, a resonance in a 3/4λ mode, or a resonance in a λ mode. λ is a wavelength corresponding to an operating frequency of the antenna.

The 1/4 mode of the first parasitic stub 20 is configured to improve efficiency of an original low-frequency resonance after the 1/4 mode of the main stub 10, and the 3/4 mode of the first parasitic stub 20 is configured to improve efficiency of an original high-frequency resonance after the 3/4 mode of the main stub 10. The 1/4 mode of the second parasitic stub 30 is configured to further improve efficiency and bandwidth of a low frequency before the 1/4 mode of the main stub 10, and the 3/4 mode of the second parasitic stub 30 is configured to further improve efficiency and bandwidth of a high frequency before the 3/4 mode of the main stub 10. Antenna performance can be further improved.

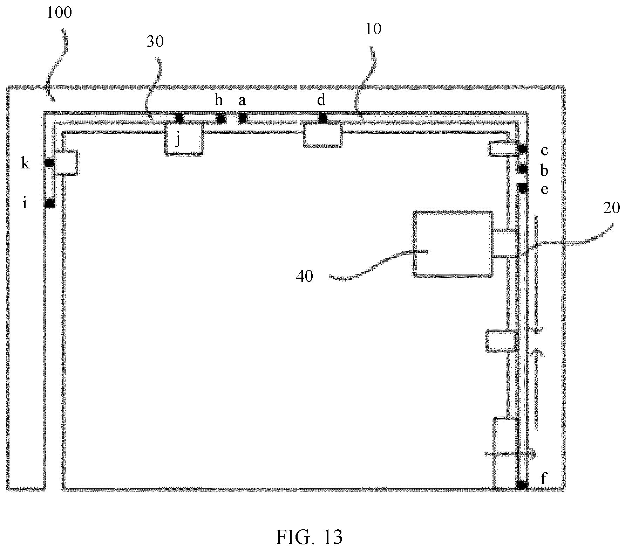

FIG. 13 is a schematic diagram of a structure of another antenna according to an embodiment of this application. For same reference numerals in FIG. 13, refer to the same reference numerals in FIG. 11. The antenna in FIG. 13 is a variant of the antenna shown in FIG. 11. A difference between the antenna shown in FIG. 13 and the antenna shown in FIG. 11 lies in that the second ground point g is connected to a high-pass low-cut filter circuit 40, and the first parasitic stub 20 generates a dual-mode resonance by the filter circuit 40. When the second ground point g of the first parasitic stub 20 is changed to the high-pass low-cut filter circuit 40, an effect of exciting a double resonance mode may also be achieved, except that a parasitic mode of the first parasitic stub 20 is changed from the original 3/4 mode of the first parasitic stub 20 to a 1/4 filtering mode in which the second ground point g returns to the ground.

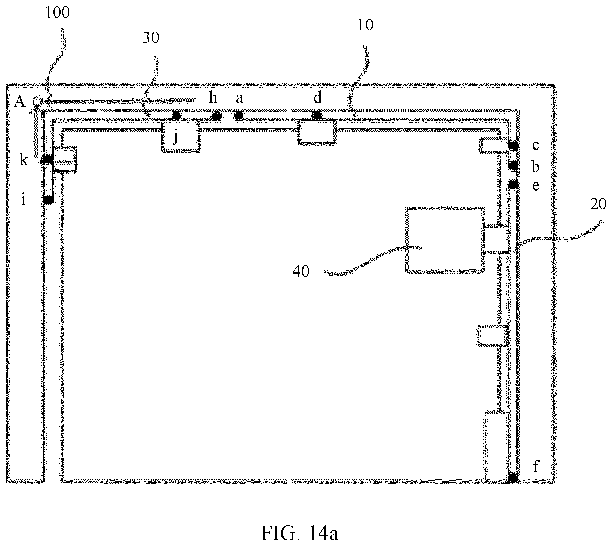

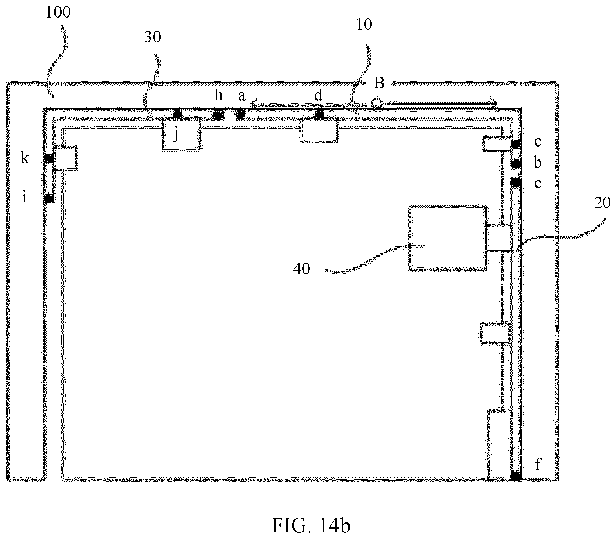

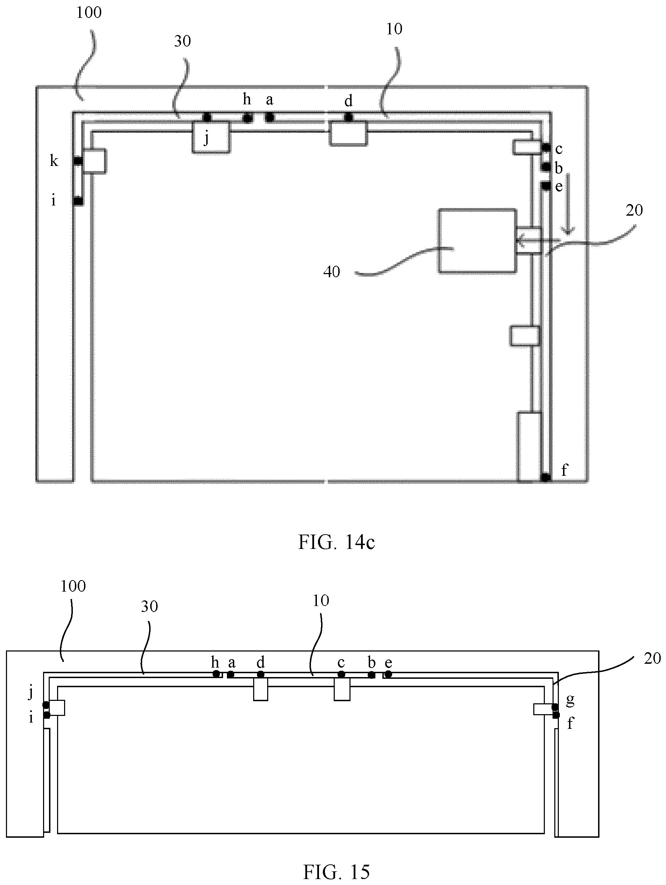

FIG. 14a to FIG. 14c show a current status of each stub on the antenna when a high frequency is configured. As shown in FIG. 14a, a current flows from the fourth ground point k of the second parasitic stub 30 to a point A, and a current flows from the fifth end h of the second parasitic stub 30 to the point A. A is a point with a strongest electric field. The foregoing currents excite the 3/4 mode of the second parasitic stub 30. A resonance in the 3/4 mode excited by the second parasitic stub 30 is at 2.6 GHz. As shown in FIG. 14b, a current flows from a point B of the main stub 10 to the first end a and the second end b, and the point B is a point with a strongest electric field. The foregoing current excites the 3/4 mode of the second parasitic stub 30. A resonance in the 3/4 mode excited by the main stub 10 is at 2.7 GHz. As shown in FIG. 14c, a current flows from the third end e of the first parasitic stub 20 to the first ground point d. The current excites the 1/4 mode of the first parasitic stub 20. A resonance in the 1/4 mode excited by the first parasitic stub 20 is at 2.8 GHz.

For a low-frequency resonance excited by each stub of the antenna shown in FIG. 13, refer to related descriptions in FIG. 11. FIG. 14a to FIG. 14c show only an example of a resonance in a high frequency band.

FIG. 15 is a schematic diagram of a structure of another antenna according to an embodiment of this application. The antenna includes a main stub 10, a first parasitic stub 20, and a second parasitic stub 30. The main stub 10 is configured as a main radiation structure of the antenna, and the first parasitic stub 20 and the second parasitic stub 30 are separately coupled to the main stub 10, to expand bandwidth of the antenna.

The main stub 10 may be of a long-strip-shaped metal structure. The main stub 10 may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, the first ground point d is far away from the second end b, and the first ground point d is configured to connect to a ground cable. A length (a current path length) of the main stub 10 is not specifically limited in this application, and a specific length of the main stub 10 may be adjusted based on an operating frequency of the antenna.

The first parasitic stub 20 is a parasitic stub configured to excite a resonance in a first mode. As shown in FIG. 15, the first parasitic stub 20 may be of a long-strip-shaped structure, may be a metal frame of the mobile terminal, may be structures such as an embedded metal layer, a laser forming structure, and a flexible circuit board that are in the housing 100 of the mobile terminal, or may be another metal structure in the housing 100. The first parasitic stub 20 has a third end e and a fourth end f. A second ground point g is disposed at a location that is of the first parasitic stub 20 and that is away from the third end e. There is a gap between the third end e of the first parasitic stub 20 and the second end b of the main stub 10. The first parasitic stub 20 is coupled to the main stub 10 via the gap between the second end b and the third end e. Because both the second end b and the third end e are free ends, the first parasitic stub 20 may be coupled to the main stub 10 by electric field coupling.

In an optional solution, an end that is of the first parasitic stub 20 and that is away from the main stub 10 has a bending structure, and the bending structure may be a bending structure formed along a shape in the housing 100 of the mobile phone. In allowed space in the housing 100 of the mobile phone, the first parasitic stub 20 may be bent along the space in the housing 100 of the mobile phone, to ensure a current path length of the first parasitic stub 20.

The second parasitic stub 30 is a parasitic stub that can be configured to excite a resonance in a second mode. As shown in FIG. 15, the second parasitic stub 30 may be of a long-strip-shaped structure, and the second parasitic stub 30 has a fifth end h and a sixth end i. A third ground point j is disposed at a location that is of the second parasitic stub 30 and that is away from the fifth end h. In other words, the third ground point j is far away from an end that is of the second parasitic stub 30 and that is close to the first end a. There is a gap between the fifth end h of the second parasitic stub 30 and the first end a of the main stub 10. The second parasitic stub 30 is coupled to the main stub 10 via the gap between the first end a and the fifth end h. Because the fifth end h is a free end, and the first end a is a ground end, the second parasitic stub 30 is coupled to the main stub 10 by electric field and magnetic field coupling.

In an optional solution, an end that is of the second parasitic stub 30 and that is away from the main stub 10 has a bending structure, and the bending structure is a bending structure formed along a shape in the housing 100 of the mobile phone. In allowed space in the housing 100 of the mobile phone, the second parasitic stub 30 may be bent along the space in the housing 100 of the mobile phone, to ensure a current path length of the second parasitic stub 30.

In an optional solution, a tunable component or a fixed component may be connected between the second ground point g and the third ground point j. For example, the fixed component may be any one of a fixed resistor, a fixed capacitor, a fixed inductor component, a distributed inductor, a distributed capacitor, or a filter circuit, and the tunable component may be a switch or a variable capacitor. Any one of the foregoing components may be selectively connected to the second ground point g and the third ground point j, to adjust the current path lengths of the first parasitic stub 20 and the second parasitic stub 30. During specific connection, different components may be selected for connection in different connection manner: The second ground point g is connected to the fixed component, and the third ground point j is connected to the fixed component. Alternatively, the second ground point g is connected to the tunable component, and the third ground point j is connected to the tunable component. Alternatively, the second ground point g is connected to the fixed component, and the third ground point j is connected to the tunable component. Alternatively, the second ground point g is connected to the tunable component, and the third ground point j is connected to the fixed component. In an optional solution, a selective switch may be further disposed at the second ground point g and the third ground point j, and different fixed components or tunable components are selected by using the selective switch. Switching may be implemented based on a requirement, to increase bandwidth of the antenna.

A resonance of the first mode and a resonance of the second mode may be the same or different. The following uses an example in which the resonance of the first mode and the resonance of the second mode are different, for illustration.

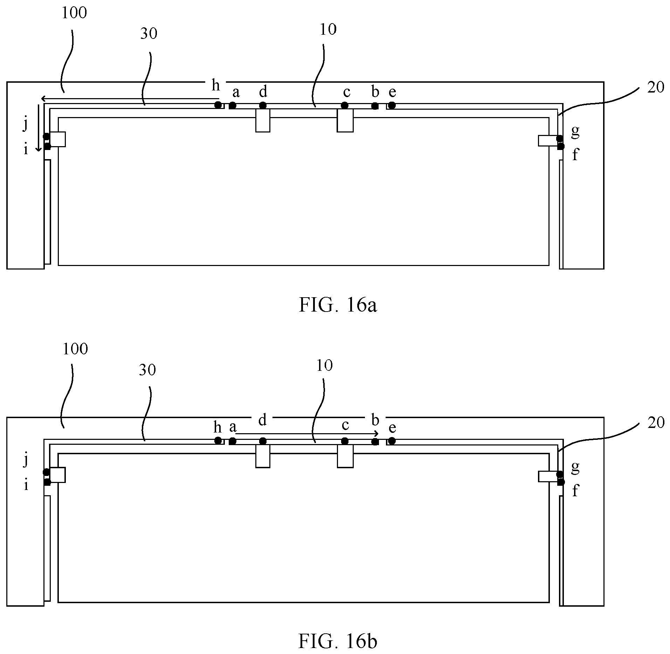

FIG. 16a to FIG. 16c are schematic diagrams of currents of an antenna according to an embodiment of this application.

First, refer to FIG. 16a. A current flows from the fifth end h of the second parasitic stub 30 to the third ground point j. The current excites the 1/2 mode of the second parasitic stub 30. A resonance in the 1/2 mode excited by the second parasitic stub 30 is at 1.6 GHz.

Refer to FIG. 16b. A current flows from the first end a of the main stub 10 to the second end b. The current excites the 1/4 mode of the main stub 10. A resonance in the 1/4 mode excited by the circuit on the main stub 10 is at 1.75 GHz.

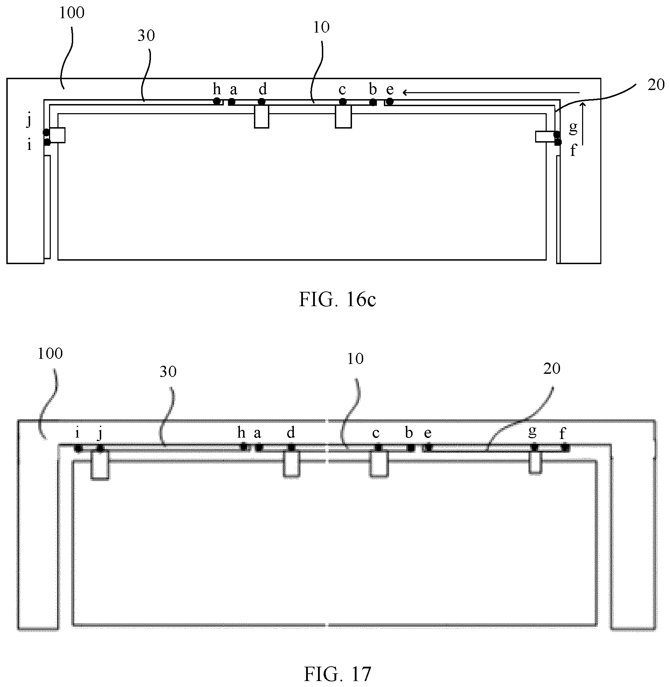

Refer to FIG. 16c. A current flows from the fourth end f of the first parasitic stub 20 to the third end e. The current excites the 1/4 mode of the first parasitic stub 20. A resonance in the 1/4 mode excited by the first parasitic stub 20 is at 2.0 GHz.

It can be learned from the foregoing description that, the 1/4 mode is excited by the main stub 10, the 1/2 mode (a small end capacitor 1 pF to the ground) is excited by the first parasitic stub 20 and placed after a main mode, so that in-band efficiency may be improved from -4.9 to -2.4, and a 5 mm body SAR decreases from 1.96 to 1.44. The 1/2 mode is excited by the second parasitic stub 30 and placed before the 1/4 mode of the main stub 10 (a small end capacitor 3 pF to the ground), so that the in-band efficiency may be further improved from -2.4 to -1.5, and the 5 mm body SAR further decreases from 1.44 to 0.76. Bandwidth and efficiency of the antenna are improved.

In an optional solution, based on the antenna in FIG. 15, the fixed capacitors 3 pF and 1 pF are replaced with tunable components such as switches SW1 and SW2, so that switching between two parasitic 1/2 modes in a full frequency band below Sub6G can be implemented.

FIG. 17 is a schematic diagram of a structure of another antenna according to an embodiment of this application. The antenna includes a main stub 10, a first parasitic stub 20, and a second parasitic stub 30. The main stub 10 is configured as a main radiation structure of the antenna, and the first parasitic stub 20 and the second parasitic stub 30 are separately coupled to the main stub 10, to expand bandwidth of the antenna.

The main stub 10 is of a long-strip-shaped metal structure, may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, the first ground point d is far away from the second end b, and the first ground point d is configured to connect to a ground cable. A length (a current path length) of the main stub 10 is not specifically limited in this application, and a specific length of the main stub 10 may be adjusted based on an operating frequency of the antenna.

The first parasitic stub 20 is a parasitic stub configured to excite a resonance in a first mode. As shown in FIG. 17, the first parasitic stub 20 is of a long-strip-shaped structure, may be a metal frame of the mobile terminal, may be structures such as an embedded metal layer, a laser forming structure, and a flexible circuit board that are embedded in the housing 100 of the mobile terminal, or may be another metal structure in the housing 100. The first parasitic stub 20 has a third end e and a fourth end f. A second ground point g is disposed at a location that is of the first parasitic stub 20 and that is away from the third end e. There is a gap between the third end e of the first parasitic stub 20 and the second end b of the main stub 10. The first parasitic stub 20 is coupled to the main stub 10 via the gap between the second end b and the third end e. Because both the second end b and the third end e are free ends, the first parasitic stub 20 is coupled to the main stub 10 by electric field coupling.

The second parasitic stub 30 is a parasitic stub configured to excite a resonance in a second mode. As shown in FIG. 15, the second parasitic stub 30 is of a long-strip-shaped structure, and the second parasitic stub 30 has a fifth end h and a sixth end i. A third ground point j is disposed at a location that is of the second parasitic stub 30 and that is away from the fifth end h. In other words, the third ground point j is far away from an end that is of the second parasitic stub 30 and that is close to the first end a. There is a gap between the fifth end h of the second parasitic stub 30 and the first end a of the main stub 10. The second parasitic stub 30 is coupled to the main stub 10 via the gap between the first end a and the fifth end h. Because the fifth end h is a free end, and the first end a is a ground end, the second parasitic stub 30 is coupled to the main stub 10 by electric field and magnetic field coupling.

In an optional solution, a tunable component or a fixed component may be connected between the second ground point g and the third ground point j. For example, the fixed component may be any one of a fixed resistor, a fixed capacitor, a fixed inductor component, a distributed inductor, a distributed capacitor, or a filter circuit, and the tunable component may be a switch or a variable capacitor. Any one of the foregoing components may be selectively connected to the second ground point g and the third ground point j, to adjust the current path lengths of the first parasitic stub 20 and the second parasitic stub 30. During specific connection, different components may be selected for connection in different connection manner: The second ground point g is connected to the fixed component, and the third ground point j is connected to the fixed component. Alternatively, the second ground point g is connected to the tunable component, and the third ground point j is connected to the tunable component. Alternatively, the second ground point g is connected to the fixed component, and the third ground point j is connected to the tunable component. Alternatively, the second ground point g is connected to the tunable component, and the third ground point j is connected to the fixed component.

In an optional solution, a selective switch may be further disposed at the second ground point g and the third ground point j, and different fixed components or tunable components are selected by using the selective switch. Switching may be implemented based on a requirement, to increase bandwidth of the antenna.

A resonance of the first mode and a resonance of the second mode may be the same or different. The following uses an example in which the resonance of the first mode and the resonance of the second mode are different, for illustration.

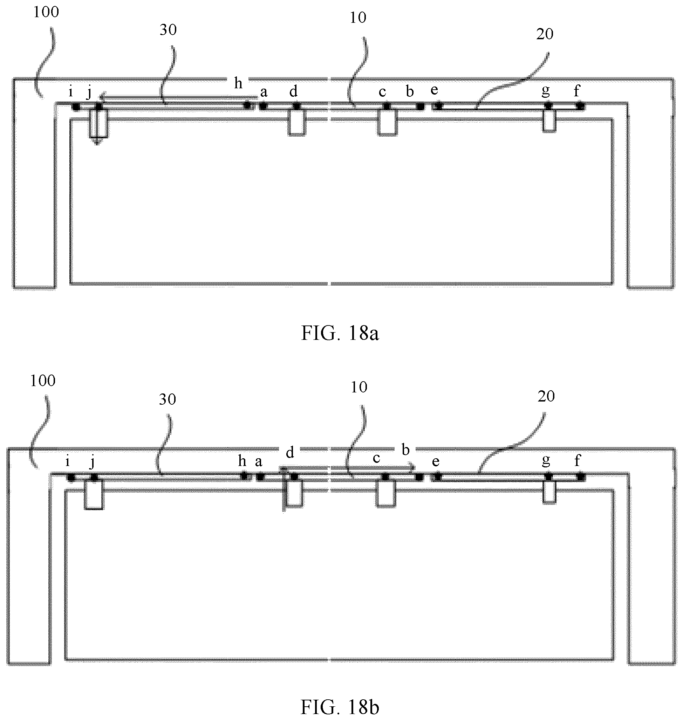

FIG. 18a to FIG. 18c are schematic diagrams of currents of an antenna according to an embodiment of this application.

First, refer to FIG. 18a. A current flows from the fifth end h of the second parasitic stub 30 to the sixth end i. The current excites the 1/4 mode of the second parasitic stub 30. A resonance in the 1/4 mode excited by the second parasitic stub 30 is at 1.65 GHz.

Refer to FIG. 18b. A current flows from the first ground point d of the main stub 10 to the second end b. The current excites the 1/4 mode of the main stub 10. A resonance in the 1/4 mode excited by the circuit on the main stub 10 is at 1.75 GHz.

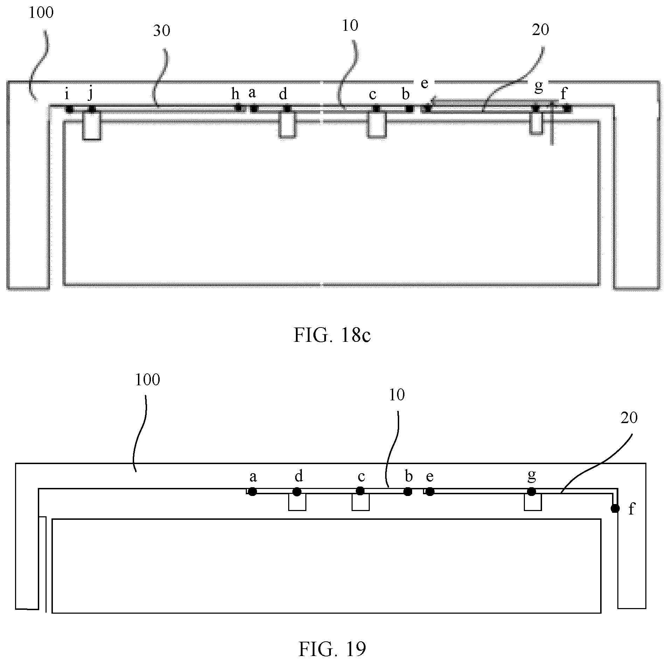

Refer to FIG. 18c. A current flows from the second ground point g of the first parasitic stub 20 to the third end e. The current excites the 1/4 mode of the first parasitic stub 20. A resonance in the 1/4 mode excited by the first parasitic stub 20 is at 2.0 GHz.

It can be learned from the foregoing description that the 1/4 mode is excited by the main stub 10, the 1/4 mode is excited by the first parasitic stub 20, and the 1/2 mode is excited by the second parasitic stub 30 and placed before the 1/4 mode of the main stub 10, so that radiation efficiency of both a front half and a rear half of a main resonance (a resonance excited by the main stub 10) is improved.

FIG. 19 is a schematic diagram of a structure of another antenna according to an embodiment of this application. The antenna shown in FIG. 19 includes a first parasitic stub 20 and a main stub 10. The main stub 10 is configured as a main radiation structure of the antenna, and the first parasitic stub 20 is coupled to the main stub 10, to expand bandwidth of the antenna.

The main stub 10 is of a long-strip-shaped metal structure, may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, and the first ground point d is configured to connect to a ground cable. A length (a current path length) of the main stub 10 is not specifically limited in this application, and a specific length of the main stub 10 may be adjusted based on an operating frequency of the antenna.

The first parasitic stub 20 is a parasitic stub configured to excite resonances in two different modes. As shown in FIG. 5, the first parasitic stub 20 is of a long-strip-shaped structure, may be a metal frame of the mobile terminal, may be structures such as an embedded metal layer, a laser forming structure, and a flexible circuit board that are embedded in the housing 100 of the mobile terminal, or may be another metal structure in the housing 100. The first parasitic stub 20 has a third end e and a fourth end f. A second ground point g is disposed at a location that is of the first parasitic stub 20 and that is away from the third end e. There is a gap between the third end e of the first parasitic stub 20 and the second end b of the main stub 10. The first parasitic stub 20 is coupled to the main stub 10 via the gap between the second end b and the third end e. Because both the second end b and the third end e are free ends, the first parasitic stub 20 is coupled to the main stub 10 by electric field coupling.

In an optional solution, an end that is of the first parasitic stub 20 and that is away from the main stub 10 has a bending structure, and the bending structure is a bending structure formed along a shape in the housing 100 of the mobile phone. In allowed space in the housing 100 of the mobile phone, the first parasitic stub 20 may be bent along the space in the housing 100 of the mobile phone, to ensure a current path length of the first parasitic stub 20.

In an optional solution, a tunable component or a fixed component may be connected between the second ground point g. For example, the fixed component may be any one of a fixed resistor, a fixed capacitor, a fixed inductor component, a distributed inductor, a distributed capacitor, or a filter circuit, and the tunable component may be a switch or a variable capacitor.

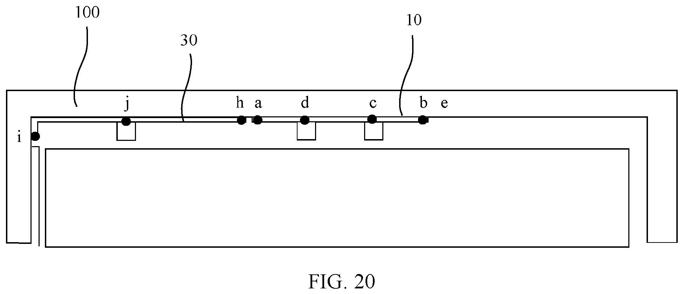

FIG. 20 is a schematic diagram of a structure of another antenna according to an embodiment of this application. The antenna shown in FIG. 19 includes a second parasitic stub 30 and a main stub 10. The main stub 10 is configured as a main radiation structure of the antenna, and the second parasitic stub 30 is coupled to the main stub 10, to expand bandwidth of the antenna.

The main stub 10 is of a long-strip-shaped metal structure, may be a metal frame of the mobile terminal, may be structures such as an embedded metal layer, a laser forming structure, and a flexible circuit board that are in the housing 100 of the mobile terminal, or may be another metal structure in the housing 100. Two ends of the main stub 10 are respectively a first end a and a second end b. A feed point c is disposed at a position that is of the main stub 10 and that is close to the second end b, and the feed point c is configured to connect to a feed line. A first ground point d is disposed at a position that is of the main stub 10 and that is close to the first end a, and the first ground point d is configured to connect to a ground cable. A length (a current path length) of the main stub 10 is not specifically limited in this application, and a specific length of the main stub 10 may be adjusted based on an operating frequency of the antenna.

The second parasitic stub 30 is a parasitic stub configured to excite resonances in two different modes. As shown in FIG. 5, the second parasitic stub 30 is of a long-strip-shaped structure, and the second parasitic stub 30 has a fifth end h and a sixth end i. A third ground point j is disposed at a location that is of the second parasitic stub 30 and that is away from the fifth end h. There is a gap between the fifth end h of the second parasitic stub 30 and the first end a of the main stub 10. The second parasitic stub 30 is coupled to the main stub 10 via the gap between the first end a and the fifth end h. Because the fifth end h is a free end, and the first end a is a ground end, the second parasitic stub 30 is coupled to the main stub 10 by electric field and magnetic field coupling.

In an optional solution, an end that is of the second parasitic stub 30 and that is away from the main stub 10 has a bending structure, and the bending structure is a bending structure formed along a shape in the housing 100 of the mobile phone. In allowed space in the housing 100 of the mobile phone, the second parasitic stub 30 may be bent along the space in the housing 100 of the mobile phone, to ensure a current path length of the second parasitic stub 30.

In an optional solution, a tunable component or a fixed component may be connected between the first ground point d and the third ground point j. For example, the fixed component may be any one of a fixed resistor, a fixed capacitor, a fixed inductor component, a distributed inductor, a distributed capacitor, or a filter circuit, and the tunable component may be a switch or a variable capacitor.

In the antennas shown in FIG. 19 and FIG. 20, although the antenna includes only one parasitic stub (the first parasitic stub 20 or the second parasitic stub 30), the first parasitic stub 20 is a parasitic stub that can be configured to excite resonances in two different modes, and the second parasitic stub 30 is also a parasitic stub that can be configured to excite resonances in two different modes. In the foregoing technical solution, the first parasitic stub 20 and the second parasitic stub 30 are coupled to the main stub 10 in an electric field coupling manner or an electric field and magnetic field coupling manner, to excite a resonance to improve antenna efficiency, expand bandwidth, and improve antenna performance.

An embodiment of this application further provides a mobile terminal. The mobile terminal includes a housing 100 and the antenna according to any one of the foregoing solutions disposed in the housing 100. In the foregoing technical solution, the first parasitic stub 20 and the second parasitic stub 30 are coupled to the main stub 10 in an electric field coupling manner or an electric field and magnetic field coupling manner, to excite a resonance to improve antenna efficiency, expand bandwidth, and improve antenna performance.

In a specific implementable solution, the first parasitic stub 20, the main stub 10, and the second parasitic stub 30 may be disposed at any position of the housing 100, including but not limited to upper and lower short edges, left and right long edges, four corners combining the long and short edges of the housing 100, and the like. This facilitates antenna configuration. The upper and lower short edges may be edges that are respectively close to an earpiece of a mobile phone and a microphone of the mobile phone. The left and right long edges are another two edges adjacent to the upper and lower short edges. In the figure illustrated in this embodiment of this application, although only an example in which the antenna is disposed on the upper short edge of the housing 100 is shown, the foregoing figure is merely an example of an antenna structure. The antenna provided in this embodiment of this application may alternatively be disposed on the lower short edge, the left and right long edges, or the corners of the long and short edges of the housing 100.

In a specific implementable solution, an implementation of the antenna includes but is not limited to making the main stub 10, the first parasitic stub 20, and the second parasitic stub 30 from a metal frame, an embedded metal, a laser forming structure, a flexible circuit board, or another metal material in the housing 100. The foregoing material is a relatively common material used as a radiator of an antenna in a mobile phone. Details are not described herein again.

It is clearly that a person skilled in the art can make various modifications and variations to this application without departing from the scope of this application. This application is intended to cover these modifications and variations of this application provided that they fall within the scope of protection defined by the claims of this application.

## Claims

1. An antenna, comprising a main stub (10), a first parasitic stub (20), and a second parasitic stub (30), wherein the main stub (10) comprises a first end (a) and a second end (b), a feed point (c) is disposed on the main stub (10), the feed point (c) is close to the second end (b), and the feed point (c) is configured to connect to a feed line,
a first ground point (d) is disposed on the main stub (10), and the first ground point (d) is close to the first end (a) and far away from the second end (b);
the first parasitic stub (20) and the second parasitic stub (30) are respectively arranged on two sides of the main stub (10);
the first parasitic stub (20) comprises a third end (e) and a fourth end (f), the second parasitic stub (30) comprises a fifth end (h) and a sixth end (i), the first parasitic stub (20) is coupled to the main stub (10) via the gap between the second end (b) and the third end (e), the second parasitic stub (30) is coupled to the main stub (10) via the gap between the first end (a) and the fifth end (h);
a second ground point (g) is disposed on the first parasitic stub (20), at a location that is away from the third end (e);
a third ground point (j) is disposed on the second parasitic stub (30) at a location that is close to the fifth end (h),
a fourth ground point (k) is disposed on a side that is of the second parasitic stub (30) and that is close the sixth end (i); and
a fifth ground point (l) is disposed on a side that is of the first parasitic stub (30) and that is close to the fourth end (f);
wherein, a frequency of a resonance excited by the first parasitic stub (20) is greater than a frequency of a resonance excited by the main stub (10); and a frequency of a resonance excited by the second parasitic stub (30) is less than the frequency of the resonance excited by the main stub (10).

2. The antenna according to claim 1, wherein the first parasitic stub (20) is a parasitic stub configured to excite resonances in two different modes; and
the second parasitic stub (30) is a parasitic stub configured to excite resonances in two different modes.

3. The antenna according to claim 2, wherein the resonances in the two different modes comprise any two of a resonance in a 1/4λ mode, a resonance in a 1/2λ mode, a resonance in a 3/4λ mode, or a resonance in a λ mode, wherein λ is a wavelength corresponding to an operating frequency of the antenna.

4. The antenna according to any of claims 1-3,
wherein the second ground point (g) is connected to a high-pass low-cut filter circuit (40) of the antenna.

5. The antenna according to any one of claims 1 to 4,
wherein the second ground point (g), the third ground point (j), or the fourth ground point is separately connected to a tunable component of the antenna or a fixed component of the antenna.

6. The antenna according to claim 5,
wherein the fixed component is any one of a fixed resistor component, a fixed capacitor component, a fixed inductor component, a distributed inductor, a distributed capacitor, and a filter circuit; and
the tunable component is one of a switch or a variable capacitor.

7. The antenna according to claim 1, wherein the first parasitic stub (20) is a parasitic stub configured to excite a resonance in a first mode, the second parasitic stub (30) is a parasitic stub configured to excite a resonance in a second mode, and the first mode is the same as the second mode.

8. The antenna according to claim 1, wherein the first parasitic stub (20) is a parasitic stub configured to excite a resonance in a first mode, the second parasitic stub (30) is a parasitic stub configured to excite a resonance in a second mode, and the first mode is different from the second mode.

9. The antenna according to claim 7 or 8, wherein in the first mode or the second mode is any one of: 1/4λ mode, 1/2λ mode, 3/4λ mode, or λ mode, wherein λ is a wavelength corresponding to an operating frequency of the antenna.

10. A mobile terminal, comprising a housing (100) and the antenna according to any one of claims 1 to 9 disposed in the housing (100).

## Patentansprüche

1. Antenne, umfassend einen Haupt-Stub (10), einen ersten parasitären Stub (20) und einen zweiten parasitären Stub (30), wobei
der Haupt-Stub (10) ein erstes Ende (a) und ein zweites Ende (b) umfasst, ein Einspeisepunkt (c) an dem Haupt-Stub (10) angeordnet ist, der Einspeisepunkt (c) nahe dem zweiten Ende (b) ist und der Einspeisepunkt (c) konfiguriert ist, um mit einer Speiseleitung verbunden zu sein,
ein erster Erdungspunkt (d) an dem Haupt-Stub (10) angeordnet ist und der erste Erdungspunkt (d) nahe dem ersten Ende (a) und weit entfernt von dem zweiten Ende (b) ist;
der erste parasitäre Stub (20) und der zweite parasitäre Stub (30) entsprechend auf zwei Seiten des Haupt-Stub (10) angeordnet sind;
der erste parasitäre Stub (20) ein drittes Ende (e) und ein viertes Ende (f) umfasst, der zweite parasitäre Stub (30) ein fünftes Ende (h) und ein sechstes Ende (i) umfasst, der erste parasitäre Stub (20) über den Spalt zwischen dem zweiten Ende (b) und dem dritten Ende (e) mit dem Haupt-Stub (10) gekoppelt ist, der zweite parasitäre Stub (30) über den Spalt zwischen dem ersten Ende (a) und dem fünften Ende (h) mit dem Haupt-Stub (10) gekoppelt ist;
ein zweiter Erdungspunkt (g) an dem ersten parasitären Stub (20) an einer Stelle angeordnet ist, die von dem dritten Ende (e) entfernt ist;
ein dritter Erdungspunkt (j) an dem zweiten parasitären Stub (30) an einer Stelle angeordnet ist, die nahe dem fünften Ende (h) ist,
ein vierter Erdungspunkt (k) auf einer Seite, die von dem zweiten parasitären Stub (30) ist und die nahe dem sechsten Ende (i) ist, angeordnet ist; und
ein fünfter Erdungspunkt (1) auf einer Seite, die von dem ersten parasitären Stub (30) ist und die nahe dem vierten Ende (f) ist, angeordnet ist;
wobei eine Frequenz einer durch den ersten parasitären Stub (20) angeregten Resonanz größer ist als eine Frequenz einer durch den Haupt-Stub (10) angeregten Resonanz; und eine Frequenz einer durch den zweiten parasitären Stub (30) angeregten Resonanz kleiner ist als die Frequenz der durch den Haupt-Stub (10) angeregten Resonanz.

2. Antenne nach Anspruch 1, wobei der erste parasitäre Stub (20) ein parasitärer Stub ist, konfiguriert, um Resonanzen in zwei verschiedenen Modi anzuregen; und
der zweite parasitäre Stub (30) ein parasitärer Stub ist, konfiguriert, um Resonanzen in zwei unterschiedlichen Modi anzuregen.

3. Antenne nach Anspruch 2, wobei die Resonanzen in den zwei unterschiedlichen Modi zwei beliebige von einer Resonanz in einem 1/4λ-Modus, einer Resonanz in einem 1/2λ-Modus, einer Resonanz in einem 3/4A-Modus oder einer Resonanz in einem λ-Modus umfassen, wobei λ eine Wellenlänge ist, die einer Betriebsfrequenz der Antenne entspricht.

4. Antenne nach einem der Ansprüche 1-3, wobei der zweite Erdungspunkt (g) mit einer Hochpass-Tiefpassfilterschaltung (40) der Antenne verbunden ist.

5. Antenne nach einem der Ansprüche 1 bis 4, wobei der zweite Erdungspunkt (g), der dritte Erdungspunkt (j) oder der vierte Erdungspunkt separat mit einer abstimmbaren Komponente der Antenne oder einer festen Komponente der Antenne verbunden ist.

6. Antenne nach Anspruch 5, wobei die feste Komponente eine feste Widerstandskomponente, eine feste Kondensatorkomponente, eine feste Induktorkomponente, eine verteilte Induktorkomponente, ein verteilter Kondensator oder eine Filterschaltung ist; und
die abstimmbare Komponente entweder ein Schalter oder ein variabler Kondensator ist.

7. Antenne nach Anspruch 1, wobei der erste parasitäre Stub (20) ein parasitärer Stub ist, konfiguriert, um eine Resonanz in einem ersten Modus anzuregen, der zweite parasitäre Stub (30) ein parasitärer Stub ist, konfiguriert, um eine Resonanz in einem zweiten Modus anzuregen, und der erste Modus derselbe ist wie der zweite Modus.

8. Antenne nach Anspruch 1, wobei der erste parasitäre Stub (20) ein parasitärer Stub ist, konfiguriert, um eine Resonanz in einem ersten Modus anzuregen, der zweite parasitäre Stub (30) ein parasitärer Stub ist, konfiguriert, um eine Resonanz in einem zweiten Modus anzuregen, und sich der erste Modus von dem zweiten Modus unterscheidet.

9. Antenne nach Anspruch 7 oder 8, wobei der erste Modus oder der zweite Modus einer der folgenden ist: 1/4λ-Modus, 1/2λ-Modus, 3/4λ-Modus oder A-Modus, wobei λ eine Wellenlänge ist, die einer Betriebsfrequenz der Antenne entspricht.

10. Mobiles Endgerät, umfassend ein Gehäuse (100) und die in dem Gehäuse (100) angeordnete Antenne nach einem der Ansprüche 1 bis 9.

## Revendications

1. Antenne, comprenant un tronçon principal (10), un premier tronçon parasite (20) et un second tronçon parasite (30), dans laquelle
le tronçon principal (10) comprend une première extrémité (a) et une deuxième extrémité (b), un point d'alimentation (c) est disposé sur le tronçon principal (10), le point d'alimentation (c) est proche de la deuxième extrémité (b), et le point d'alimentation (c) est configuré pour se connecter à une ligne d'alimentation,
un premier point de masse (d) est disposé sur le tronçon principal (10), et le premier point de masse (d) est proche de la première extrémité (a) et éloigné de la deuxième extrémité (b) ;
le premier tronçon parasite (20) et le second tronçon parasite (30) sont respectivement agencés sur deux côtés du tronçon principal (10) ;
le premier tronçon parasite (20) comprend une troisième extrémité (e) et une quatrième extrémité (f), le second tronçon parasite (30) comprend une cinquième extrémité (h) et une sixième extrémité (i), le premier tronçon parasite (20) est couplé au tronçon principal (10) par le biais de l'espace entre la deuxième extrémité (b) et la troisième extrémité (e), le second tronçon parasite (30) est couplé au tronçon principal (10) par le biais de l'espace entre la première extrémité (a) et la cinquième extrémité (h) ;
un deuxième point de masse (g) est disposé sur le premier tronçon parasite (20), à un emplacement qui est éloigné de la troisième extrémité (e) ;
un troisième point de masse (j) est disposé sur le second tronçon parasite (30) à un emplacement qui est proche de la cinquième extrémité (h),
un quatrième point de masse (k) est disposé sur un côté qui est du second tronçon parasite (30) et qui est proche de la sixième extrémité (i) ; et
un cinquième point de masse (1) est disposé sur un côté qui est du premier tronçon parasite (30) et qui est proche de la quatrième extrémité (f) ;
dans laquelle, une fréquence d'une résonance excitée par le premier tronçon parasite (20) est supérieure à une fréquence d'une résonance excitée par le tronçon principal (10) ; et une fréquence d'une résonance excitée par le second tronçon parasite (30) est inférieure à la fréquence de la résonance excitée par le tronçon principal (10).

2. Antenne selon la revendication 1, dans laquelle le premier tronçon parasite (20) est un tronçon parasite configuré pour exciter des résonances dans deux modes différents ; et
le second tronçon parasite (30) est un tronçon parasite configuré pour exciter des résonances dans deux modes différents.

3. Antenne selon la revendication 2, dans laquelle les résonances dans les deux modes différents comprennent deux résonances quelconques parmi une résonance dans un mode 1/4λ, une résonance dans un mode 1/2λ, une résonance dans un mode 3/4λ ou une résonance dans un mode λ, dans laquelle λ est une longueur d'onde correspondant à une fréquence de fonctionnement de l'antenne.

4. Antenne selon l'une quelconque des revendications 1 à 3, dans laquelle le deuxième point de masse (g) est connecté à un circuit de filtre passe-haut coupe-bas (40) de l'antenne.

5. Antenne selon l'une quelconque des revendications 1 à 4, dans laquelle le deuxième point de masse (g), le troisième point de masse (j) ou le quatrième point de masse est connecté séparément à un composant accordable de l'antenne ou à un composant fixe de l'antenne.

6. Antenne selon la revendication 5, dans laquelle le composant fixe est l'un quelconque d'un composant à résistance fixe, un composant à condensateur fixe, un composant à inductance fixe, une inductance distribuée, un condensateur distribué et un circuit de filtrage ; et
le composant accordable est l'un d'un commutateur ou d'un condensateur variable.

7. Antenne selon la revendication 1, dans laquelle le premier tronçon parasite (20) est un tronçon parasite configuré pour exciter une résonance dans un premier mode, le second tronçon parasite (30) est un tronçon parasite configuré pour exciter une résonance dans un second mode, et le premier mode est le même que le second mode.

8. Antenne selon la revendication 1, dans laquelle le premier tronçon parasite (20) est un tronçon parasite configuré pour exciter une résonance dans un premier mode, le second tronçon parasite (30) est un tronçon parasite configuré pour exciter une résonance dans un second mode, et le premier mode est différent du second mode.

9. Antenne selon la revendication 7 ou 8, dans laquelle le premier mode ou le second mode est l'un quelconque des modes suivants : mode 1/4λ, mode 1/2A, mode 3/4λ ou mode λ, dans laquelle λ est une longueur d'onde correspondant à une fréquence de fonctionnement de l'antenne.

10. Terminal mobile, comprenant un boîtier (100) et l'antenne selon l'une quelconque des revendications 1 à 9 disposée dans le boîtier (100).
